# EUROPEAN PATENT SPECIFICATION

(11) **EP 0 885 858 B1**
(45) Date of publication and mention of the grant of the patent: **26.11.2003**
(21) Application number: 98111040.6
(22) Date of filing: 16.06.1998
(51) Int. Cl.: C04B 35/573

(54) **Recrystallized silicon carbide sintered material and manufacturing method thereof**
Rekristallisiertes, gesintertes Siliciumcarbidmaterial und Herstellungsverfahren dafür
Matériau fritté en carbure de silicium recrystallisé et son procédé de fabrication

(30) Priority: 18.06.1997 JP 16111797; 20.03.1998 JP 7264498
(43) Date of publication of application: 23.12.1998
(73) Proprietor: NGK INSULATORS, LTD., Nagoya-City, Aichi Prefecture 467-0871 (JP)
(72) Inventor: Hanzawa, Shigeru, Kagamihara-city, Gifu-pref. 509-0122 (JP); Komiyama, Tsuneo, Toki-city, Gifu-prefecture 509-5161 (JP); Aihara, Yasufumi, Nagoya-city, Aichi-prefecture 452-0815 (JP)
(74) Representative: Leson, Thomas Johannes Alois, Dipl.-Ing.

(56) References cited:
- US-A- 3 951 587

## Description

### Background of the Invention and Related Art Statement

The present invention relates to a recrystallized SiC sintered material which is excellent in its characteristics such as strength, corrosion resistance, thermal conductivity and an electrical insulation property as well as a manufacturing method thereof.

Under the circumstances where renovations of technologies proceed rapidly, purification, intensification and improvement of characteristics required for electronic appliances are repeated incessantly and rapidly.

To enhance performance of electronic appliances, manufacturing facilities and environments are also improved or ameliorated incessantly and rapidly.

In the fields of liquid crystal cell manufacturing processes and semiconductor treatments in particular, it is examined to adopt facilities which use materials excellent in strength, corrosion resistance, thermal conductivity and electrical insulation properties, and expensive metals and fine ceramics are investigated for application to manufacturing jigs for these facilities.

Though qualities of alumina, silicon carbide, silicon nitride and so on have so far been improved to obtain fine ceramics which have the characteristics mentioned above, there has been obtained no material which is configured to satisfactorily balance these characteristics.

By bringing characteristics of these fine ceramics close to those of metals, there have been developed Si-SiC composites which have characteristics of both the metals and the fine ceramics, whereby Si-SiC is now utilized as pressing plate jigs for liquid crystal cells and radiant tubes for thermal semiconductor treatments. US-A-3 951 587 discloses semiconductor diffusion furnace components comprising sintered recrystallized 99 to 100 % pure SiC impregnated with 5-30 wt. % silicon.

Further, characteristics of sintered materials are conventionally dependent only on characteristics of raw materials used since impurities which are dispersed and adhere to the materials are regarded as inevitable elements though only raw materials of the fine ceramics and composite materials (Si-SiC) which are to be used in electronic appliances and manufacturing fields thereof are purified.

Accordingly, non-oxide type ceramics such as silicon carbide and silicon nitride have defect that they contain a large amount of silica components which are produced by oxidation of SiC and Si₃N₄ when the non-oxide ceramics are brought into contact with atmospheric oxygen and water vapor while they are handled.

Since it is difficult to sinter fine ceramics, composite materials and metal materials so as to have high purities without handling all raw materials in clean environments such as clean rooms, it is conventionally obliged to prepare remarkably expensive facilities and offer products at high prices.

Though the materials are treated, or sintered in particular, in an atmospheric environment, nitrogen atmosphere, argon atmosphere or atmosphere mixed with an inert gas at a certain ratio, there is used no means which functions to keep the atmosphere always clean.

At a stage to sinter a non-oxide ceramic or a recrystallized SiC composite material, strength is extremely lowered due to a defect caused by elimination of CO gas which is produced by a reaction between C (free carbon) existing in the sintering atmosphere in particular and oxygen as well as a reaction between C (free carbon) and SiO₂ and due to an unusual growth of crystalline particles, and thermal ununiformities in conductivity are produced due to a large number of pores remaining in a sintered material.

Moreover, SiO₂ dissolves impure elements existing in surroundings and deposits, thereby frequently varying original resistivities of materials or making them ununiform.

In case of recrystallized SiC in particular, its use is limited in low temperature environments in particular since it is an electric resistor which has a resistivity as low as 0.1 to 50 Ω·cm at low temperatures not exceeding 500 °C and variable, and hinders characteristics of general ceramics having electrical insulation properties.

In addition, recrystallized SiC has a thermal conductivity which is variable from 30 to 70 W/m·K since recrystallized SiC proper allows a large number of pores to remain therein or has a porosity of 10 to 25 % and it is considered difficult to enhance this absolute value. In other words, it is necessary to sinter SiC elaborately for obtaining the original high thermal conductivity of SiC itself.

### Summary of the Invention

The present invention which has been achieved in view of the problems described above has a primary object to provide a recrystallized SiC sintered material which exhibits a high resistivity of a recrystallized SiC ceramic, a clear electrical insulation property and a remarkably enhanced thermal conductivity as a merit of SiC as well as a manufacturing method of this recrystallized SiC sintered material.

Further, the present invention provides a method which comprises a treating step contrived to enhance a purity of a sintered material conventionally dependent on purities of raw materials, thereby being capable of manufacturing a sintered material having a purity higher than those of raw materials.

That is, the present invention provides a recrystallized SiC sintered material comprising 0.01 to 2 % by weight of SiO₂ and 99.99 to 98 % by weight of SiC, and having a resistivity controlled to 500 to 50000 Ω·cm.

It is preferable that the SiC sintered material has a thermal conductivity of 100 to 200 W/m·K.

Furthermore, the present invention provides a method for manufacturing a recrystallized SiC sintered material comprising, preparing a molded body containing SiC as a main component and sintering the molded body, wherein the sintering is conducted so that the molded body is heated up to 2000 °C in two hours or longer at a pressure of 0.01 to 2 atms while flowing an inert gas at a rate of 0.01 to 10 times of an effective volume (a heating region) of a kiln per minute, and then is heated to 2000 to 2500 ° C at a pressure of 0.5 to 2 atms.

It is preferable that a purity of SiC is kept at a level not lower than 98.0 % and that a purity of sintered SiC becomes higher than those of raw materials of the molded body.

### Detailed Description of Preferred Embodiment

The recrystallized SiC sintered material according to the present invention comprising 0.01 to 2 % by weight of SiO₂ and 99.99 to 98 % by weight of SiC, and has a resistivity of 500 to 50000 Ω·cm and a thermal conductivity which is controlled preferably to 100 to 200 W/m·K.

Accordingly, the present invention is capable of providing a recrystallized SiC sintered material which has an electric resistivity remarkably enhanced as compared with the conventional level of 0.1 to 50 Ω·cm and a thermal conductivity remarkably improved as compared with the conventional level of 30 to 70 W/m·K.

Therefore, the recrystallized SiC sintered material according to the present invention is applicable, with no fear of electrical leak, to liquid crystal cell pressing plates which are brought into contact with nichrome wire heaters and indirectly heated.

Further, the recrystallized SiC sintered material is applicable also to heat spreaders for semiconductor CPUs, heat sinks for thyristors and so on.

The recrystallized SiC sintered material according to the present invention comprising 0.01 to 2 % by weight of SiO₂ and 99.99 % to 98 % by weight of SiC, and it is possible to enhance its versatility by adjusting its composition dependently on purposes of use.

Now, description will be made of the manufacturing method of a recrystallized SiC sintered material according to the present invention.

First, some kinds of molded bodies are prepared as follows. One of the molded bodies is prepared by pressing the raw materials. Another kind of the molded body is prepared by adding a binder to the raw materials to obtain a slurry and casting the slurry into a molded body. Further, the other kind of the molded bodies is prepared by casting the slurry into the molded body and calcining it to obtain the molded body from which the binder is eliminated. The binder may be eliminated in an atmosphere containing oxygen or an inert gas atmosphere.

It is preferable that SiC particles to be used in the raw materials of the molded body are granulated, for example, by the spray dry method, that the particles are a mixture of coarse particles of SiC having a mean particle size of 30 to 100 microns and fine particles of SiC having a mean particle size of 0.1 to 30 microns and that the coarse particles are contained at a ratio of at least 40 % by weight.

Further, it is preferable to add the binder to the raw materials at an adequate ratio dependent on a moldability of the SiC particles.

Furthermore, it is preferable to keep a purity of SiC to be used as the raw material of the molded body at a level of 98.0 % or higher so that a manufactured recrystallized SiC sintered material has a purity higher than those of the raw materials.

Accordingly, the manufacturing method according to the present invention is capable of allowing a purity of a sintered material which is conventionally dependent on purities of raw materials to be enhanced at the treating step, thereby making it possible to manufacture a sintered material having a purity higher than those of the raw materials.

A recrystallized SiC sintered material is manufactured by heating a molded body thus obtained up to 2000 ° C in two hours or longer at a pressure of 0.01 to 2 atms while flowing an inert gas at a rate of 0.01 to 100 times of an effective volume (a heating region) of a kiln per minute (NL/min) and then heating it to 2000 to 2500 ° C at a pressure of 0.5 to 2 atms.

Further, detailed description will be made of firing conditions for the recrystallized SiC sintered material according to the present invention.

For firing the molded body by heating it up to a sintering temperature, it is desirable to raise temperature up to a sintering region of 2000 °C in two hours or longer at an internal pressure of a sintering kiln of 0.01 to 2 atms while flowing an inert gas at a rate (NL/min) of 0.01 to 10 times, more preferably 0.1 to 10 times or much more preferably 1.0 to 10 times, of an effective volume (a heating region) of a kiln.

The inert gas fills a sintering region, thereby eliminating CO produced by decomposition of an organic polymer from the sintering atmosphere during the sintering and providing an effect to prevent the sintering atmosphere from being contaminated by external O₂, etc. which is contained in the sintering atmosphere.

It is preferable to use Ar as an inert gas for ceramics of SiC type though it is not limitative.

To recrystallize the molded body it is desirable to raise an atmospheric temperature up to 2000 to 2500 ° C, more preferably to 2200 to 2450 ° C.

At this temperature, impurities such as SiO₂ which exist on surfaces of the SiC particles are removed by the inert gas flowing at a constant rate, and SiC particles grow large and come in contact with adjacent SiC particles in a condition where they are free from vitreous covers such as SiO₂, thereby allowing SiC to exhibit its original high thermal conductivity.

During the sintering for recrystallization at 2000 to 2500 ° C after the temperature rises up to 2000 °C, it is possible to cool the molded body and then heat it once again for sintering or treat it continuously in the same furnace.

The present invention will be described more detailedly with reference to the preferred examples which are illustrative and not limitative.

### (Examples 1 through 9, and Comparative Examples 1 and 2)

Coarse particles of SiC and fine particles of SiC were mixed as starting materials at percentages by weight and purities (%) shown in Table 1 ( raw materials of molded bodies).

10 to 20 % by weight of water and an adequate amount of a binder were added to prepare slurries of molded bodies.

The starting materials prepared at the steps described above were poured into predetermined molds for molding, thereby manufacturing molded bodies which had thicknesses (mm), densities (g/cc) and porosities (%) which are summarized in Table 1.

Describing in more detail, the molded bodies which have the thicknesses (mm) densities (g/cc) and porosities (%) listed in Table 1 were manufactured by blending the starting materials prepared at the steps described above with an organic binder at a ratio of 2 % by weight relative to 100 % by weight of the starting materials, preparing slurries dissolved in 10 to 20 % by weight of an ion exchange water and casting the slurries (the Examples 1 through 9)

**[Table 1]**

| | SiC Coarse Particles | | SiC Fine Particles | | Thickness (mm) | Density (g/cc) | Porosity (%) |
|---|---|---|---|---|---|---|---|
| | Wt% | Purity (%) | Wt% | Purity (%) | | | |
| Example 1 | 55 | 98.01 | 45 | 98.02 | 10 | 2.65 | 16.7 |
| Example 2 | 50 | 98.55 | 50 | 98.32 | 20 | 2.69 | 16.4 |
| Example 3 | 45 | 98.88 | 55 | 98.63 | 30 | 2.72 | 14.5 |
| Example 4 | 55 | 99.26 | 45 | 98.91 | 40 | 2.69 | 15.4 |
| Example 5 | 50 | 99.50 | 50 | 99.27 | 50 | 2.77 | 12.9 |
| Example 6 | 45 | 99.84 | 55 | 99.41 | 10 | 2.75 | 13.5 |
| Example 7 | 45 | 99.23 | 55 | 98.65 | 30 | 2.72 | 14.5 |
| Example 8 | 50 | 99.51 | 50 | 99.27 | 50 | 2.69 | 15.4 |
| Example 9 | 50 | 99.89 | 50 | 99.69 | 70 | 2.76 | 13.5 |
| (Note) The purities of SiC (%) were measured by analysis with fluorescent X-ray while regarding coexisting SiO₂ as an impurity. | | | | | | | |

Using a kiln which had a volume of 1000 liter (including a layer of a heat insulation material) and an effective volume of 200 liter (a volume of a sheath made of carbon), recrystallized SiC sintered materials were manufactured by heating the prepared molded bodies up to 2000 °C in 2 to 24 hours at a pressure of 0.01 to 2 atms while flowing Ar gas at rates (NL/min) listed in Table 2 and then heated up to 2000 to 2500 ° C at a pressure of 0.5 to 2 atms (Examples 1 through 9).

"Heating the prepared molded bodies up to 2000 ° C in 2 to 24 hours" includes various cases, for example, a case wherein the molded body was heated up to 2000 ° C at a rate of 350 ° C/hour and another case wherein the molded body was kept at 1400 °C for 12 hours and then heated up to 2000 ° C at a rate of 700 ° C/hour.

For comparison with the sintering conditions selected for the manufacturing method of recrystallized SiC sintered material according to the present invention, recrystallized SiC sintered materials were manufactured by heating the molded bodies used in the Example 1 and the Example 2 up to 2000 °C in 1 to 1.5 hours at an internal pressure of 0.01 to 2 atms using a kiln which had a volume of 1000 liter (including a layer of a heat insulation layer) and an effective volume of 200 liter (a volume of a sheath made of carbon) while balancing an atmosphere in the kiln only with a small amount of an inert gas for adjusting a pressure, and then heating up to a temperature of 2000 to 2500 °C (Comparative Examples 1 and 2).

Characteristics of all the recrystallized SiC sintered materials thus obtained are summarized in Table 2.

**[Table 2]**

| | Theoretical purity of recrystallized SiC sintered material (%) | Ar gas flow rate (NL/min) | Time to heat up to 2000 °C (Hr) | Purity determined by actual analysis (%) | Resistivity (Ω·cm) | Thermal conductivity [at 100 °C] (W/m·K) |
|---|---|---|---|---|---|---|
| Example 1 | 98.01 | 500 | 18.0 | 98.57 | 780 | 112 |
| Example 2 | 98.44 | 10 | 2.0 | 98.61 | 520 | 108 |
| Example 3 | 98.74 | 30 | 12.0 | 98.62 | 2100 | 120 |
| Example 4 | 99.10 | 10 | 6.0 | 99.14 | 4560 | 140 |
| Example 5 | 99.39 | 30 | 24.0 | 99.53 | 13200 | 169 |
| Example 6 | 99.60 | 2 | 12.0 | 99.62 | 26100 | 172 |
| Example 7 | 99.46 | 2000 | 6.0 | 99.62 | 35500 | 174 |
| Example 8 | 99.39 | 60 | 6.0 | 99.40 | 8490 | 156 |
| Example 9 | 99.79 | 100 | 12.0 | 99.94 | 48300 | 195 |
| Comparative Example 1 | 98.01 | 0.1 | 1.5 | 98.01 | 60 | 40 |
| Comparative Example 2 | 98.44 | 0.1 | 1.0 | 98.44 | 80 | 75 |

As understood from the foregoing description, the present invention makes it possible to enhance resistivities of recrystallized SiC ceramics which are conventionally used in heaters, etc., impart electrical insulation properties of these ceramics and remarkably improve thermal conductivities, thereby being capable of providing a recrystallized SiC sintered material which can exhibit the merits of recrystallized SiC or its original strength and corrosion resistance as well as a manufacturing method thereof.

Further, the present invention provides a method which permits manufacturing a sintered material having a purity higher than those of raw materials by enhancing a purity of the sintered material which is conventionally dependent on purities of the raw materials at a treating step.

A recrystallized SiC sintered material is composed of 0.01 to 2 % by weight of SiO₂ and 99.99 to 98 % by weight of SiC, and has a resistivity controlled to 500 to 50000 Ω·cm. The recrystallized SiC sintered material is manufactured by heating the SiC molded body up to 2000 ° C in two hours or longer at a pressure of 0.01 to 2 atms while flowing an inert gas at a rate of 0.01 to 10 times of an effective volume (a heating region) of a kiln per minute and then heating up to 2000 to 2500 ° C at a pressure of 0.5 to 2 atms. The recrystallized SiC sintered material has an enhanced resistivity of a recrystallized SiC ceramic, an electrical insulation property, a remarkably improved thermal conductivity, and strength and corrosion resistance as original merits of the recrystallized SiC.

## Claims

1. A recrystallized SiC sintered material comprising 0.01 to 2 % by weight of SiO₂ and 99.99 to 98 % by weight of SiC, and having a resistivity controlled to 500 to 50000 Ω·cm.

2. A recrystallized SiC sintered material according to claim 1,wherin the SiC sintered material has a thermal conductivity of 100 to 200 W/m·K.

3. A method for manufacturing a recrystallized SiC sintered material comprising,
preparing a molded body containg SiC as main component, and
sintering the molded body,
wherein the sintering is conducted so that the molded body is heated up to 2000 °C in at least two hours at a pressure of 1.013 to 202.650kPa (0.01 to 2 atms)while flowing an inert gas at a rate of 0.01 to 10 times of an effective volume a heating region, of a kiln per minute and then heating up to 2000 to 2500 °C at a pressure of 50.66 to 202.650 kPa (0.5 to 2 atms).

4. A method for manufacturing a recrystallized SiC sintered material according to claim 3, wherein a purity of SiC is kept at 98.0 % or higher.

5. A method for manufacturing a recrystallized SiC sintered material according to claim 3 or 4, wherein a purity of the SiC sintered material is higher than purities of the raw materials for a molded body.

## Patentansprüche

1. Rekristallisiertes, gesintertes SiC-Material mit 0,01 bis 2 Gew.-% SiO₂ und 99,99 bis 98 Gew.-% SiC und mit einem auf 500 bis 50.000 Ω·cm gesteuerten spezifischen Widerstand.

2. Rekristallisiertes, gesintertes SiC-Material nach Anspruch 1, wobei das gesinterte SiC-Material eine thermische Leitfähigkeit von 100 bis 200 W/m·K hat.

3. Verfahren zur Herstellung eines rekristallisierten, gesinterten SiC-Materials mit
Erzeugen eines geformten Körpers, der SiC als Hauptbestandteil enthält, und
Sintern des geformten Körpers,
wobei das Sintern so durchgeführt wird, dass der geformte Körper in wenigstens zwei Stunden auf bis zu 2.000°C bei einem Druck von 1,013 bis 202,650 kPa (0,01 bis 2 atm) erwärmt wird, während ein inertes Gas in einer 0,01- bis zum 10-fachen Geschwindigkeit eines wirkungsvollen Volumens eines Heizbereiches eines Brennofen pro Minute fließt, und dann Erwärmen auf 2.000 bis 2.500°C bei einem Druck von 50,66 bis 202,650 kPa (0,05 bis 2 atm).

4. Verfahren zur Herstellung eines rekristallisierten, gesinterten SiC-Materials nach Anspruch 1, wobei die Reinheit des SiC bei 98,0% oder höher gehalten wird.

5. Verfahren zur Herstellung eines rekristallisierten, gesinterten SiC-Materials nach Anspruch 3 oder 4, wobei die Reinheit des gesinterten SiC-Materials höher als die Reinheiten der Rohmaterialien für einen geformten Körper ist.

## Revendications

1. Matériau fritté de SiC recristallisé comprenant 0,01 à 2 % en poids de SiO₂ et 99,9 à 98 % en poids de SiC, et ayant une résistivité réglée à 500-50000 Ω.cm.

2. Matériau fritté de SiC recristallisé selon la revendication 1, dans lequel le matériau fritté de SiC a une conductibilité thermique de 100 à 200 W/m.K.

3. Procédé de fabrication d'un matériau fritté de SiC recristallisé comprenant les étapes de
préparation d'un corps moulé contenant SiC comme composant principal, et
frittage du corps moulé,
dans lequel le frittage est conduit de sorte que le corps moulé est chauffé jusqu'à 2000°C en au moins 2 heures à une pression de 1,013 à 202,650 kPa (0,01 à 2 atmosphères) tout en faisant circuler un gaz inerte à un débit de 0,01 à 10 fois le volume effectif, une zone de chauffage, d'un four par minute et en chauffant ensuite jusqu'à 2000-2500°C à une pression de 50,66 à 202,650 kPa (0,5 à 2 atmosphères).

4. Procédé de fabrication d'un matériau fritté de SiC recristallisé selon la revendication 3, dans lequel la pureté de SiC est maintenue à 98 % ou plus.

5. Procédé de fabrication d'un matériau fritté de SiC recristallisé selon la revendication 3 ou 4, dans lequel la pureté du matériau fritté de SiC est supérieure aux puretés des matières premières pour un corps moulé.
